# EUROPEAN PATENT APPLICATION

(11) **EP 4 625 548 A1**
(43) Date of publication of application: **01.10.2025**
(21) Application number: 24214314.7
(22) Date of filing: 20.11.2024
(51) Int. Cl.: H01M 4/62

(54) **ANODE FOR SECONDARY BATTERY AND LITHIUM SECONDARY BATTERY INCLUDING THE SAME**

(30) Priority: 26.03.2024 KR 20240040913
(71) Applicant: SK On Co., Ltd., Seoul 03161 (KR)
(72) Inventor: JEON, Chi Won, 34124 Daejeon (KR); PARK, Sung Jun, 34124 Daejeon (KR); JO, Yeong Min, 34124 Daejeon (KR); KIM, Min Hyung, 34124 Daejeon (KR); HWANG, Hye Won, 34124 Daejeon (KR)
(74) Representative: Prüfer & Partner mbB Patentanwälte · Rechtsanwälte

(57) **Abstract**

According to an embodiment, an anode for a secondary battery includes: an anode current collector; and an anode mixture layer on at least one surface of the anode current collector, wherein the anode mixture layer includes an anode active material, a binder, and a thermal crosslinking additive, and a weight of the binder included in the anode mixture layer is greater than a weight of the thermal crosslinking additive included in the anode mixture layer.

According to an embodiment of the disclosed technology, energy density of the anode for a secondary battery may be improved.

## Description

### BACKGROUND

### 1. FIELD

The present disclosure relates to an anode for a secondary battery and a lithium secondary battery including the same.

### 2. DESCRIPTION OF THE RELATED ART

Currently, a lot of research into electric vehicles (EV) that may replace fossil fuel-based vehicles, such as gasoline vehicles, diesel vehicles, or the like, which are one of the main causes of air pollution, is being actively conducted. A lithium secondary battery having a high discharge voltage and output stability is mainly used as a power source for such an electric vehicle (EV).

Generally, an electrode for a secondary battery is manufactured by drying and then rolling a slurry including an active material, and a secondary battery cell is manufactured by stacking and assembling electrodes manufactured as described above. Meanwhile, a final thickness of the electrode depending on the design generally refers to a rolling thickness, and a thickness of the secondary battery cell is determined according to the number of stacked electrode layers. To secure high energy density in such a secondary battery, a thickness of the electrode and cell volume may be reduced.

### SUMMARY

An aspect of the disclosed technology is to prevent a spring back phenomenon in which an electrode thickness increases from occurring, as compared to a design thickness during a process of manufacturing a secondary battery.

Another aspect of the disclosed technology is to prevent damage to an electrode from occurring during a process of manufacturing a secondary battery.

Another aspect of the disclosed technology is to improve manufacturing processability of a secondary battery.

According to an aspect of the present disclosure, an anode for a secondary battery, includes: an anode current collector; and an anode mixture layer on at least one surface of the anode current collector, wherein the anode mixture layer includes an anode active material, a binder (a "first" binder in the optional case that an additional "second" binder may be further included in an embodiment), and a thermal crosslinking additive, and a weight of the binder (a first binder) included in the anode mixture layer is greater than a weight of the thermal crosslinking additive included in the anode mixture layer.

The (first) binder may include a cellulose-based compound.

The thermal crosslinking additive may include at least one selected from the group consisting of epoxy-based compounds, borate-based compounds, thiol-based compounds, and carboxylic acid-based compounds.

The epoxy-based compound may include at least one selected from the group consisting of poly(ethylene glycol) diglycidyl ether (PEGDE) and polypropylene glycol) diglycidyl ether (PPGDE).

The borate-based compound may include at least one selected from the group consisting of sodium borate, sodium tetraborate, tetrahydroxy borate, and sodium tetraborate decahydrate.

The thiol-based compound may include at least one selected from the group consisting of 3-mercaptopropionic acid, L-cysteine, and 3-mercapto-1,2-propanediol.

A weight ratio of the (first) binder and the thermal crosslinking additive included in the anode mixture layer may be greater than 5:5 and equal to or less than 9: 1.

The weight ratio of the (first) binder and the thermal crosslinking additive included in the anode mixture layer may be 7:3 to 9:1.

A content of the thermal crosslinking additive included in the anode mixture layer may be 0.1 to 5 wt%.

The anode mixture layer may further include a second rubber-based compound (as an additional binder in addition to the first binder).

A weight ratio of the first binder and the second binder included in the anode mixture layer may be 1: 1 to 1:5.

A loading weight (LW) of the anode mixture layer may be 7 mg/cm² or more.

Density of the anode mixture layer may be 1.4 to 1.8 g/cc.

Electrode adhesion between the anode current collector and the anode mixture layer may be 0.4 N/m² or more.

The anode mixture layer may include a first anode mixture layer on the anode current collector, and a second anode mixture layer on the first anode mixture layer.

The thermal crosslinking additive may be included in the second anode mixture layer.

A lithium secondary battery according to an embodiment includes an anode for a secondary battery according to one of the above-described embodiments.

### BRIEF DESCRIPTION OF DRAWINGS

Certain aspects, features, and advantages of the disclosed technology may be illustrated by the following detailed description with reference to the accompanying drawings.
FIG. 1 is a diagram illustrating the results of electrode adhesion evaluation for an anode according to Example and Comparative Examples.
FIG. 2 is a cross-sectional view conceptually illustrating an anode according to an embodiment.
FIG. 3 is a cross-sectional view conceptually illustrating an anode according to another embodiment.

### DETAILED DESCRIPTION

Hereinafter, the disclosed technology disclosed in this patent and the example embodiments are described in detail with reference to the attached drawings. However, the embodiments of the technology can be modified into various other forms, and the scope thereof is not limited to the example embodiments described below. In addition, the disclosed technology disclosed in this patent document may be applied not only limitedly to the configurations of the example embodiments described below, but also may be configured by selectively combining all or part of each example embodiment so that various modifications can be made.

As described above, an electrode for a secondary battery is commonly manufactured by driving and then rolling a slurry including an active material, and a secondary battery cell is manufactured by stacking electrodes manufactured as described above and assembling the same. However, during a vacuum drying (VD) process to remove moisture before electrode assembly, stress within the electrode for a secondary battery may be relieved by heat, causing a spring back phenomenon in which a final thickness of the electrode increases, as compared to the design thickness.

An increase in electrode thickness will affect an increase in volume of the final manufactured secondary battery cell, and to control this, higher pressure and/or additional rolling processes may be required during electrode rolling. In this case, the electrode may be damaged during the rolling process or production processability of the secondary battery may deteriorate.

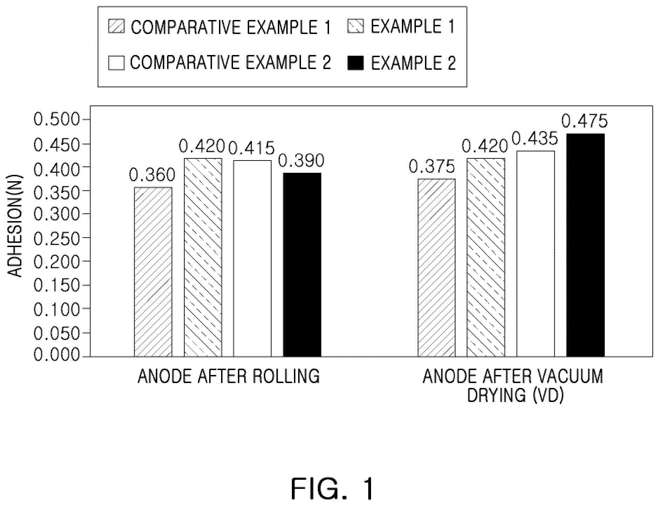

According to an embodiment of the present disclosure, the spring back phenomenon described above may be suppressed by adding a thermal crosslinking additive during electrode manufacturing. Hereinafter, embodiments of the present disclosure will be specifically described with reference to FIGS. 1 to 3.

FIG. 1 is a diagram illustrating the results of electrode adhesion evaluation for an anode according to Example and Comparative Examples.

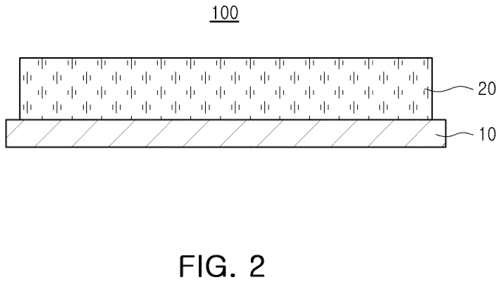

FIG. 2 is a cross-sectional view conceptually illustrating an anode according to an embodiment.

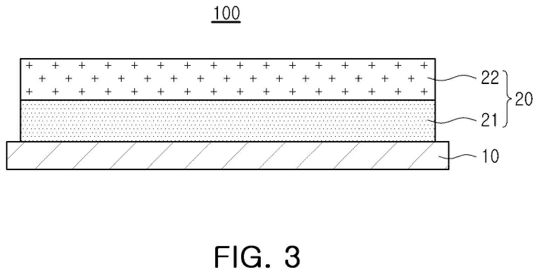

FIG. 3 is a cross-sectional view conceptually illustrating an anode according to another embodiment.

### Electrode for a lithium secondary battery

An anode for a secondary battery 100 according to an embodiment includes an anode current collector 10; and an anode mixture layer 20 on at least one surface of the anode current collector, wherein the anode mixture layer 20 includes an anode active material, a binder, and a thermal crosslinking additive, and a weight of the binder included in the anode mixture layer 20 is greater than a weight of the thermal crosslinking additive included in the anode mixture layer. Unless indicated otherwise, "a binder" or "the binder" means a or the "first" binder for the optional case that, in certain embodiments, an additional or another "second" binder may be used. Hereinafter, the thermal crosslinking additive included in the anode mixture layer may include 1) a thermally-crosslinked form between thermal crosslinking additives and/or 2) a thermally-crosslinked form between the thermal crosslinking additive and another compound included in the anode mixture layer. For example, 1) the thermally-crosslinked form between the thermal crosslinking additives and/or 2) the thermally-crosslinked form between the thermal crosslinking additive and another compound included in the anode mixture layer may be a polymer.

Components of the anode current collector 10 are not particularly limited. For example, the anode current collector may be a plate or foil formed of at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and alloys thereof. In addition, a thickness of the anode current collector is not particularly limited. For example, the thickness of the anode current collector 10 may be 0.1 to 50 µm.

According to an embodiment, the anode mixture layer 20 may have a single layer structure (see FIG. 2). According to another embodiment, the anode mixture layer 20 may have a dual layer structure including a first anode mixture layer 21 on at least one surface of the anode current collector 10; and a second anode mixture layer 22 on the first anode mixture layer 21 (see FIG. 3).

The anode active material is not particularly limited. For example, the anode active material may be at least one selected from the group consisting of carbon-based materials such as crystalline carbon, amorphous carbon, carbon composites, and carbon fibers; lithium metal; lithium alloys; silicon-containing materials, and tin-containing materials.

The crystalline carbon may be, for example, graphite-based carbon such as natural graphite, artificial graphite, graphitized cokes, graphitized mesocarbon microbeads (MCMB), and graphitized mesophase pitch-based carbon fibers (MPCF).

Examples of the amorphous carbon may include hard carbon, soft carbon, cokes, mesocarbon microbeads (MCMB), or mesophase pitch-based carbon fibers (MPCF).

Elements included in the lithium alloy may be, for example, aluminum, zinc, bismuth, cadmium, antimony, silicon, lead, tin, gallium or indium.

The silicon-containing material is not particularly limited as long as it contains silicon, and may be an active material that can be alloyed with lithium (Li). For example, the silicon-containing material may be at least one selected from the group consisting of silicon (Si), silicon oxide (SiOx; 0<x<2), metal-doped silicon oxide (SiOx; 0<x<2), carbon-coated silicon oxide (SiOx; 0<x<2), silicon-carbon composite (Si-C), and silicon alloy.

In the embodiments in which the anode mixture layer 20 includes a first anode mixture layer 21 and a second anode mixture layer 22, the first anode mixture layer 21 and the second anode mixture layer 22 may include a silicon-containing material, respectively.

In the embodiments in which the first anode mixture layer 21 and the second anode mixture layer 22 include a silicon-containing material, respectively, a content of the silicon-containing material included in the second anode mixture layer 22 may be greater than or equal to a content of the silicon-containing material included in the first anode mixture layer 21.

In the embodiments in which the first anode mixture layer 21 and the second anode mixture layer 22 include a silicon-containing material, respectively, a weight ratio of the silicon-containing material included in the first anode mixture layer 21 and the silicon-containing material included in the second anode mixture layer 22 may be 1:2 to 1:10.

When the silicon-containing material is added as described above, a silicon-containing material having a large degree of volume expansion/contraction during secondary battery charging/discharging may be included in a relatively small amount in the first anode mixture layer 21 adjacent to the anode current collector 10, so that an anode detachment phenomenon may be prevented and the lifespan of the secondary battery may be improved.

A content of the anode active material included in the anode mixture layer 20 may be, for example, 50 to 99 wt%, or 80 to 95 wt%.

The binder may provide viscosity to the anode slurry, thereby strengthening cohesion between the anode active materials, and suppressing the occurrence of cracks on a surface of the electrode. The binder may be crosslinked with the thermal crosslinking additive described above to suppress swelling of the electrode.

In some embodiments, the binder may include a cellulose-based compound. For example, the cellulose-based compound may be at least one selected from the group consisting of methyl cellulose (MC), carboxymethyl cellulose (CMC), hydroxypropyl methyl cellulose (HPMC), and hydroxypropyl cellulose (HPC). In some embodiments, the binder may include the cellulose-based compound described above in the form of an alkali metal salt.

A content of the binder included in the anode mixture layer 20 may be, for example, 0.01 to 30 wt%, or 0.1 to 10 wt%.

In some embodiments, the anode mixture layer 20 may further include a rubber-based compound as a second binder. The rubber-based compound may serve as an additional (second) binder improving adhesion between components in the anode slurry and further improving adhesion between the anode current collector 10 and the anode mixture layer 20. For example, the rubber-based compound of the second binder may be at least one selected from the group consisting of styrene-butadiene rubber (SBR), fluorine-based rubber, ethylene propylene rubber, butadiene rubber, isoprene rubber, and silane-based rubber.

A content of the second binder included in the anode mixture layer 20 may be, for example, 0.01 to 30 wt%, or 0.1 to 10 wt%.

In some embodiments, a weight ratio of the first binder and the second binder included in the anode mixture layer may be 1:1 to 1:5. For example, the weight ratio of the first binder and the second binder included in the anode mixture layer may be 1:1 to 1:3.

In the embodiments in which the anode mixture layer 20 includes a first anode mixture layer 21 and a second anode mixture layer 22, the first anode mixture layer 21 and the second anode mixture layer 22 may include a first binder and an additional (or a different) second binder, respectively.

In the embodiments in which the anode mixture layer 20 includes a first anode mixture layer 21 and a second anode mixture layer 22, the first anode mixture layer 21 and the second anode mixture layer 22 may include a first binder and an additional second binder, respectively.

When the binder is added as described above, the adhesion between the anode current collector 10 and the anode mixture layer 20 may be further improved by including a relatively large amount of binder in the first anode mixture layer 21 adjacent to the anode current collector 10.

The thermal crosslinking additive is a compound that can be crosslinked by heat and can be thermally cured in the vacuum drying (VD) process described above. When the anode mixture layer includes a thermal crosslinking additive, the components within the electrode may be crosslinked by the thermal crosslinking additive during the secondary battery manufacturing process, thereby improving the electrode adhesion. In addition, the stress within the electrode may be alleviated, thereby suppressing the spring back phenomenon described above.

The thermal crosslinking additive may include at least one selected from the group consisting of an epoxy-based compound, a borate-based compound, a thiol-based compound, and a carboxylic acid-based compound. In some embodiments, the thermal crosslinking additive may be one selected from the group consisting of an epoxy-based compound, a borate-based compound, a thiol-based compound, and a carboxylic acid-based compound.

The epoxy-based compound may include at least one selected from the group consisting of poly(ethylene glycol) diglycidyl ether (PEGDE) and polypropylene glycol) diglycidyl ether (PPGDE).

The borate-based compound may include at least one selected from the group consisting of sodium borate, sodium tetraborate, tetrahydroxy borate, and sodium tetraborate decahydrate.

The thiol-based compound may include at least one selected from the group consisting of 3-mercaptopropionic acid, L-cysteine, and 3-mercapto-1,2-propanediol.

In the embodiments in which the anode mixture layer 20 includes a first anode mixture layer 21 and a second anode mixture layer 22, a content of the thermal crosslinking additive included in the second anode mixture layer 22 may be greater than or equal to a content of the thermal crosslinking additive included in the first anode mixture layer 21.

In the embodiments in which the anode mixture layer 20 includes a first anode mixture layer 21 and a second anode mixture layer 22, the thermal crosslinking additive may not be included in the first anode mixture layer 21 but may be included only in the second anode mixture layer 22.

When the thermal crosslinking additive is added as described above, the adhesion of an upper layer thereof may be maintained in an anode in which the content of the silicon-based active material included in the second anode mixture layer 22 is relatively higher than that of the first anode mixture layer 21, thereby suppressing deterioration due to structural collapse of the anode.

A weight of the binder (or a first binder) included in the anode mixture layer 20 preferably may be greater than a weight of the thermal crosslinking additive included in the anode mixture layer 20. For example, a weight ratio of the binder and the thermal crosslinking additive included in the anode mixture layer 20 may be greater than 5:5, greater than or equal to 6:4 or greater than or equal to 7:3, and equal to or less than 9: 1 or equal to or less than 8:2. In some embodiments, the weight ratio of the (first) binder and the thermal crosslinking additive included in the anode mixture layer 20 may be greater than 5:5 and equal to or less than 9: 1.

In some embodiments, the weight ratio of the (first) binder and the thermal crosslinking additive included in the anode mixture layer 20 may be 7:3 to 9:1. In some embodiments, the weight ratio of the (first) binder and the thermal crosslinking additive in the anode mixture layer 20 may be 7:3 to 8:2. When the relationship of the content of the binder and the thermal crosslinking additive included in the anode mixture layer 20 is as described above, a degree of curing of the anode may be significantly improved, thereby suppressing swelling and a spring back phenomenon of the electrode and improving the energy density of the anode.

A content of the thermal crosslinking additive included in the anode mixture layer 20 may be 0.1 to 5 wt%. In some embodiments, the content of the thermal crosslinking additive included in the anode mixture layer 20 may be 0.2 wt% or more, 3 wt% or less, 1 wt% or less, or 0.5 wt% or less.

The anode mixture layer 20 may further include a conductive material. The type of the conductive material is not particularly limited. For example, the conductive material may be at least one selected from a particle-type carbon material and a fibrous carbon material. The particle-type carbon material may be carbon black such as Super-P, Super-C, acetylene black, Ketjen black, graphite, or the like, and the fibrous carbon material may be carbon fiber, carbon nanotubes (CNT), vapor-grown carbon fiber (VGCF), or the like.

The content of the conductive material included in the anode mixture layer 20 may be, for example, 0.01 to 30 wt%, or 1 to 10 wt%.

A loading weight (LW) of the anode mixture layer 20 may be 7 mg/cm² or more. In some embodiments, the loading weight (LW) of the anode mixture layer 20 may be 9 mg/cm² or more or 11 mg/cm² or more, and the loading weight (LW) of the anode mixture layer 20 may be 15 mg/cm² or less or 13 mg/cm² or less. The loading weight (LW) refers to an amount of the anode mixture layer 20 formed on one surface of an anode current collector on the anode current collector 10 expressed in units of weight per area. In this case, the area is based on an area of the anode current collector 10, and the weight is based on a total weight of the formed anode mixture layer 20. When the loading weight (LW) of the anode mixture layer 20 is within the above-described range, the energy density of the electrode and the secondary battery including the same may be improved.

Density of the anode mixture layer 20 may be 1.4 to 1.8 g/cc. In some embodiments, the density of the anode mixture layer 20 may be 1.5 g/cc or more or 1.6 g/cc or more, and the density of the anode mixture layer 20 may be 1.7 g/cc or less. The density of the anode mixture layer 20 may refer to electrode density after a rolling process. When the density of the anode mixture layer 20 is within the above-described range, the energy density of the electrode and the secondary battery including the same may be improved.

Electrode adhesion between the anode current collector 10 and the anode mixture layer 20 may be 0.4 N/m² or more. In some embodiments, the electrode adhesion between the anode current collector 10 and the anode mixture layer 20 may be 0.42 N/m² or more or 0.44 N/m² or more, and 5 N/m² or less or 1 N/m² or less. When the electrode adhesion is within the above-described range, stress within the electrode may be alleviated, thereby alleviating the spring back phenomenon described above.

A method for manufacturing the anode is not particularly limited. For example, an anode slurry including the anode active material, the binder, and the thermal crosslinking additive, described above, may be applied to the anode current collector 10 by a method such as bar coating, casting, or spraying, and the anode slurry may be dried at 80 to 120°C to form an anode 100 in which the anode mixture layer 20 is formed on a surface of the anode current collector 10.

The anode slurry may further include a solvent. For example, the solvent may include dimethyl sulfoxide (DMSO), isopropyl alcohol, N-methylpyrrolidone (NMP), acetone, or water. In this case, an amount of the solvent used is not particularly limited as long as it is sufficient to dissolve or disperse the components, and to have a viscosity that can exhibit excellent thickness uniformity when applied to a current collector, in consideration of an application thickness, manufacturing yield, and the like of the slurry.

### Lithium secondary battery

A lithium secondary battery according to an embodiment includes an anode for a secondary battery 100 according to any one of the above-described embodiments. For example, the lithium secondary battery may include an anode for a secondary battery 100 and a cathode according to any one of the above-described embodiments.

The cathode may include a cathode current collector; and a cathode mixture layer on at least one surface of the cathode current collector. Components of the cathode current collector are not particularly limited. For example, the cathode current collector may be a plate or foil formed of one or more of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and alloys thereof. In addition, a thickness of the cathode current collector is not particularly limited. For example, the thickness of the cathode current collector may be 0.1 to 50 µm.

The cathode mixture layer may include a cathode active material participating in an electrochemical reaction of the secondary battery. The cathode active material is not particularly limited, and may include a compound that can reversibly intercalate and deintercalate lithium ions.

For example, the cathode active material may include a lithium-nickel metal oxide. The lithium-nickel metal oxide may further include at least one of cobalt (Co), manganese (Mn), and aluminum (Al).

In some embodiments, the cathode active material or the lithium-nickel metal oxide may include a layered structure or a crystal structure represented by the following Formula 1.

[Formula 1] LiₓNiₐM_{b}O_{2+z}

In Formula 1, 0.9≤x≤1.2, 0.6≤a≤0.99, 0.01≤b≤0.4, -0.5≤z≤0.1 may be satisfied. As described above, M may include Co, Mn, and/or Al.

A chemical structure represented by Formula 1 represents a bonding relationship included in the layered structure or crystal structure of the cathode active material and does not exclude other additional elements. For example, M includes Co and/or Mn, and Co and/or Mn can serve as a main active element of the cathode active material together with Ni. Formula 1 is provided to express the bonding relationship of the main active elements and should be understood as a formula encompassing the introduction and substitution of additional elements.

In some embodiments, auxiliary elements may be further included in addition to the main active element to enhance chemical stability of the cathode active material or the layered structure/crystal structure.

The auxiliary elements may be incorporated together into the layered structure/crystal structure to form a bond, and in this case, it should be understood that the auxiliary elements are also included within the chemical structure range represented by Formula 1. The auxiliary elements may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary elements may also act as auxiliary active elements contributing to capacity/output activity of the cathode active material, for example, together with Co or Mn, such as Al.

For example, the cathode active material or the lithium-nickel metal oxide may include a layered structure or crystal structure represented by the following Formula 1-1.

[Formula 1-1] LiₓNiₐM1_{b1}M2_{b2}O_{2+z}

In Formula 1-1, M1 may include Co, Mn, and/or Al. M2 may include the auxiliary elements described above. In Formula 1-1, 0.9≤x≤1.2, 0.6≤a≤0.99, and 0.01≤b1+b2≤0.4, -0.5≤z≤0.1 may be satisfied.

The anode active material may further include a coating element or a doping element. For example, elements substantially identical to or similar to the above-described auxiliary elements may be used as coating elements or doping elements. For example, the above-described elements may be used along or in combination of two or more thereof as a coating element or a doping element.

The coating element or doping element may be present on a surface of lithium-nickel metal oxide particles, or may penetrate through the surface of the lithium-nickel metal composite oxide particles and be included in the bonding structure represented by the Formula 1 or Formula 1-1.

The cathode active material may include a nickel-cobalt-manganese (NCM)-based lithium oxide. In this case, an NCM-based lithium oxide with an increased nickel content may be used.

A content of Ni of the NCM-based lithium oxide (e.g., a mole fraction of nickel among the number of total moles of nickel, cobalt, and manganese) may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., LiFePO4).

In some embodiments, the cathode active material may include a Mn-rich-based active material, a Li rich layered oxide (LLO)/over lithiated oxide (OLO)-based active material, or a Co-less-based active material having a chemical structure or crystal structure represented by Formula 2.

[Formula 2] p[Li₂MnO₃]·(1-p)[Li_{q}JO₂]

In Formula 2, 0<p<1 and 0.9≤q≤1.2 may be satisfied, and J may include at least one element among Mn, Ni, Co, Fe, Cr, V, Cu, Zn, Ti, Al, Mg, and B.

The cathode mixture layer may further include a binder. The binder for the cathode mixture layer is not particularly limited. For example, the binder may include one or two or more of polyvinylidene fluoride, styrene butadiene rubber (SBR), polytetrafluoroethylene, polyvinylidene fluoride, vinylidene fluoride/hexafluoropropylene copolymer, polyacrylonitrile, and polymethyl methacrylate.

The cathode mixture layer may further include a conductive material. The conductive material is not particularly limited. For example, the conductive material may include one or two or more of: graphite such as natural graphite or artificial graphite; carbon black, acetylene black, ketjen black, channel black, furnace black, lamp black, and summer black; a carbon-based material such as carbon fiber, carbon nanotubes (CNTs), and the like; metal powders or metal fibers such as copper, nickel, aluminum, and silver; conductive whiskers such as zinc oxide and potassium titanate; metal powders or metal fibers such as copper, nickel, aluminum, and silver; conductive whiskers such as zinc oxide and potassium titanate; conductive metal oxides such as titanium oxide; or conductive polymers such as polyphenylene derivatives, or the like.

According to an embodiment, the lithium secondary battery may further include a separator interposed between the cathode and anodes described above. The separator is not particularly limited. For example, the separator may include a porous polymer film formed from a polyolefin polymer such as an ethylene homopolymer, a propylene homopolymer, an ethylene/butene copolymer, an ethylene/hexene copolymer, or an ethylene/methacrylate copolymer. In addition, the separator may include a nonwoven fabric formed of high-melting-point glass fibers, polyethylene terephthalate fibers, or the like.

### Example

### 1. Manufacturing of Anode

### 1) Example 1

A first anode slurry was manufactured, the first anode slurry including 93.80 wt% of a carbon-based active material (artificial graphite) and 2.00 wt% of a silicon-based active material (SiOx; 0<x<2) as an anode active material, 1.2 wt% of carboxymethyl cellulose (CMC) as a first binder, 2.4 wt% of styrene-butadiene rubber (SBR) as a second (an additional) binder, and 0.60 wt% of a single-walled carbon nanotube (SWCNT) as a conductive material, based on a solid content.

A second anode slurry was manufactured, the second anode slurry including 83.65 wt% of a carbon-based active material (artificial graphite) and 14.00 wt% of a silicon-based active material (SiOx; 0<x<2) as an anode active material, 1.2 wt% of carboxymethyl cellulose (CMC) as a first binder, 0.6 wt% of styrene-butadiene rubber (SBR) as a second (an additional) binder, 0.25 wt% of a multi-walled carbon nanotubes (MWCNT) as a conductive material, and 0.3 wt% of poly(ethylene glycol) diglycidyl ether (PEGDE) as a thermal crosslinking additive, based on a solid content.

Thereafter, the first anode slurry and the second anode slurry were applied to a copper foil, which is a current collector, at a ratio of 50:50 with a total loading weight (LW) of 11.11 mg/cm², and then dried for 75 seconds or longer using a roll-to-roll process at 100°C or higher, thereby manufacturing an anode of Example 1 having a thickness of 171.5 µm. Thereafter, an anode was rolled with a press roll to have a thickness of 142.0 µm and a density of 1.56 g/cc. Meanwhile, a weight ratio of the first binder (CMC) and the thermosetting additive (PEGDE) included in the anode was 8:1 (= 2.4 wt%:0.3 wt%).

### 2) Example 2

A first anode slurry and a second anode slurry including artificial graphite and natural graphite as an anode active material, in a weight ratio of 70:30, were applied at a ratio of 50: 50 with a total loading weight (LW) of 11.16 mg/cm², and an anode of Example 2 having a thickness of 177.2 µm was manufactured in the same manner as Example 1.

In this case, based on a solid content, the first anode slurry was manufactured to include 65.38 wt% of artificial graphite and 28.02 wt% of natural graphite as an anode active material, include 1.2 wt% of carboxymethyl cellulose (CMC) as a first binder, include 2.4 wt% of styrene-butadiene rubber (SBR) as a second (an additional) binder, and include 3 wt% of graphite as a conductive material.

In addition, based on a solid content, the second anode slurry was manufactured to include 66.34 wt% of artificial graphite and 28.56 wt% of natural graphite as an anode electrode active material, include 1.2 wt% of carboxymethyl cellulose (CMC) as a first binder, include 0.6 wt% of styrene-butadiene rubber (SBR) as an additional second binder, include 3 wt% of graphite as a conductive material, and include 0.3 wt% of poly(ethylene glycol) diglycidyl ether (PEGDE) as a thermal crosslinking additive.

Thereafter, the anode was rolled with a press roll to have a thickness of 138.0 µm and a density of 1.64 g/cc.

### 3) Comparative Example 1

An anode of Comparative Example 1 having a thickness of 168.8 µm was manufactured in the same manner as Example 1, except that a second anode slurry did not include a thermal crosslinking additive, included 83.95 wt% of artificial graphite, and an anode slurry was applied at a total loading weight (LW) of 11.02 mg/cm².

In this case, based on a solid content, the first anode slurry was manufactured to include 93.80 wt% of a carbon-based active material (artificial graphite) and 2.00 wt% of a silicon-based active material (SiOx; 0<x<2) as an anode active material, include 1.2 wt% of carboxymethyl cellulose (CMC) as a first binder, include 2.4 wt% of styrene-butadiene rubber (SBR) as a second (an additional) binder, and include 0.60 wt% of single-walled carbon nanotubes (SWCNT) as a conductive material.

In addition, based on the solid content, the second anode slurry was manufactured to include 83.95 wt% of a carbon-based active material (artificial graphite) and 14.00 wt% of a silicon-based active material (SiOx; 0<x<2) as an anode active material, include 1.2 wt% of carboxymethyl cellulose (CMC) as a first binder, 0.6 wt% of styrene-butadiene rubber (SBR) as a second (an additional) binder, and include 0.25 wt% of multi-walled carbon nanotubes (MWCNT) as a conductive material.

Thereafter, the anode was rolled with a press roll to have a thickness of 142.0 µm and a density of 1.6 g/cc.

### 4) Comparative Example 2

An anode of Comparative Example 2 having a thickness of 173.5 µm was manufactured in the same manner as Example 2, except that a second anode slurry did not include a thermal crosslinking additive, included 66.64 wt% of artificial graphite, and an anode slurry was applied at a total loading weight (LW) of 11.05 mg/cm².

In this case, based on a solid content, the first anode slurry was manufactured to include 65.38 wt% of artificial graphite and 28.02 wt% of natural graphite as an anode active material, include 1.2 wt% of carboxymethyl cellulose (CMC) as a first binder, include 2.4 wt% of styrene-butadiene rubber (SBR) as a second (an additional) binder, and include 3 wt% of graphite as a conductive material.

In addition, based on the solid content, the second anode slurry was manufactured to include 66.64 wt% of artificial graphite and 28.56 wt% of natural graphite as an anode active material, 1.2 wt% of carboxymethyl cellulose (CMC) as a first binder, include 0.6 wt% of styrene-butadiene rubber (SBR) as a second (an additional) binder, and include 3 wt% of graphite as a conductive material.

Thereafter, the anode was rolled with a press roll to have a thickness of 138.0 µm and a density of 1.62 g/cc.

### 2. Evaluation of anode

### 1) Adhesion evaluation

For the anode manufactured as described above, electrode adhesion between an electrode current collector and an anode mixture layer was measured using a Surface and Interfacial Characterization Analysis System (SAICAS). Specifically, a Borazon blade was inserted to an adhesion measurement depth, and then the blade was moved horizontally from that position to measure the adhesion of the anode mixture layer disposed thereabove.

In addition, the electrode adhesion was measured using the same method after vacuum drying (VD) at 120°C for 8 hours for the anode. The results of the electrode adhesion evaluation are shown in FIG. 1.

Referring to FIG. 1, it was shown that an anode of Example 1 has better electrode adhesion than an anode of Comparative Example 1 not including a thermal crosslinking additive, and an anode of Example 2 has better adhesion than an anode of Comparative Example 2 not including a thermal crosslinking additive. Considering these results, it is determined that when a thermal crosslinking additive is included in the anode as in Examples 1 and 2, crosslinking of components within the electrode occurs, thereby improving the adhesion of the final manufactured electrode.

### 2) Spring back Evaluation

For an anode manufactured as described above, an anode thickness before and after vacuum drying (VD) at 120°C for 8 hours was measured. Thereafter, 1) a difference between the anode thickness after vacuum drying and the anode thickness after rolling (③ - ①) and 2) a difference between the anode thickness before and after vacuum drying (③ - ②) were calculated and shown in Table 1 below.

**[Table 1]**

| **Division** | **Anode thicknessbefore and after rolling process (µM)** | | **Anode thicknessbefore and after VD process (µm)** | | **Spring back Evaluation** | |
|---|---|---|---|---|---|---|
| | **Before** | **After(①)** | **Before(②)** | **After(③)** | **③ - ①(µm)** | **③ - ②(µm)** |
| **Comparative Example 1** | 168.8 | 142.0 | 154 | 158.7 | 16.7 | 4.7 |
| **Example 1** | 171.5 | 142.0 | 150.4 | 154.4 | 12.4 | 40 |
| **Comparative Example 2** | 173.5 | 138.0 | 143 | 150.2 | 12.2 | 7.2 |
| **Example 2** | 177.2 | 138.0 | 141.4 | 147.4 | 9.4 | 6.0 |

Referring to Table 1 above, the anodes of Examples 1 and 2 showed a relatively small difference in electrode thickness before and after the process compared to the anodes of Comparative Examples 1 and 2, respectively, and thus a spring back phenomenon was alleviated. Considering these results, it is determined that when a thermal crosslinking additive is included in the anode as in Examples 1 and 2, not only does the electrode adhesion increase due to crosslinking of components within the electrode, but also the stress within the electrode before and after the VD process is alleviated, thereby suppressing an increase in the electrode thickness before and after the VD process.

### 3. Cell Thickness Evaluation

Using an anode manufactured as described above, a cell was assembled with 43 electrode layers. Thereafter, a thickness of a final manufactured cell was measured and is shown in Table 2 below.

**[Table 2]**

| **Division** | **Cell thickness (mm)** |
|---|---|
| **Comparative Example 1** | 13.43 |
| **Example 1** | 13.26 |
| **Comparative Example 2** | 13.27 |
| **Example 2** | 13.15 |

Referring to Table 2 above, it was shown that cells assembled with the anodes of Examples 1 and 2 were thinner than cells assembled with the anodes of Comparative Examples 1 and 2, respectively. Specifically, in the case of Comparative Example 1 and Example 1, in which a difference (③ - ①) between the anode thickness after vacuum drying and the anode thickness after rolling in the spring back evaluation described above was 16.7 µm and 12.4 µm, respectively, it was shown that the thickness of the assembled cell was 13.43 mm (= 13,430 µm) and 13.26 mm (= 13,260 µm), respectively. Therefore, it was determined that the anode according to Example 1 could reduce the cell thickness by 170 µm compared to the anode according to Comparative Example 1, a result reflecting a difference in a degree of reduction in the anode thickness (16.7 µm - 12.4 µm = 4.3 µm) and the number of electrode layers (43 sheets).

In addition, in the case of Comparative Example 2 and Example 2, in which a difference (③ - ①) between the anode thickness after vacuum drying and the anode thickness after rolling in the spring back evaluation described above was 12.2 µm and 9.4 µm, respectively, it was shown that the thickness of the assembled cell was 13.27 mm (= 13,270 µm) and 13.15 mm (= 13,150 µm), respectively. Therefore, it was shown that the cathode according to Example 2 could reduce the cell thickness by 120 µm compared to the anode according to Comparative Example 2, a result reflecting a difference in a degree of reduction in the anode thickness (12.2 µm - 9.4 µm = 2.8 µm) and the number of electrode layers (43 sheets).

Considering these results, it is determined that when using an anode including a thermal crosslinking additive as in Examples 1 and 2, a volume of the final assembled cell may be reduced to improve energy density of the secondary battery, and since an additional rolling process and/or high pressure is not required to secure the energy density, damage to the electrode may be prevented and the manufacturing processability of the secondary battery may also be improved.

### 4. Evaluation of physical properties according to a weight ratio of a binder and thermal crosslinking additive

### 1) Manufacturing of binder film

For the weight ratio, the binder used as a first binder is counted. A binder film was manufactured by drying a solution containing carboxymethyl cellulose (CMC) as a binder at 100°C for 4 hours. Specifically, 1) binder films (Examples 3 to 5 and Comparative Example 3) further including a thermal crosslinking additive, poly(ethylene glycol) diglycidyl ether (PEGDE), in addition to the binder, and 2) a binder film (Comparative Example 4) not including the thermal crosslinking additive were manufactured, respectively. A weight ratio of CMC and PEGDE included in the binder film is as shown in Table 3 below.

### 2) Binder Film Evaluation

### (1) Tensile Test

A tensile test was conducted on a binder film manufactured as described above using a Universal Testing Machine (UTM) facility, and a tensile strength was measured according to a stress-strain curve. The measured tensile strength values were shown in Table 3 below.

### (2) Gel Fraction

A binder film manufactured as described above was immersed in distilled water, a solvent for 24 hours, and then the uncured portion was removed and dried at 60°C for 24 hours. Therefore, a gel fraction was calculated by analyzing a change in weight of the binder film before and after drying. The measured gel fraction values were shown in Table 3 below.

### (3) Swelling Ratio

A binder film manufactured as described above was immersed in a carbonate-based electrolyte for 24 hours, and a swelling ratio was calculated by analyzing a change in weight of the binder film before and after immersion. The measured swelling ratio values were shown in Table 3 below.

**[Table 3]**

| **Division** | **CMC: PEGDE** | **Tensile strength(MPa)** | **Gel fraction (%)** | **Swelling ratio (%)** |
|---|---|---|---|---|
| **Example 3** | 9:1 | 36.5 | 72.00 | 20.00 |
| **Example 4** | 8:2 | 25.3 | 75.68 | 5.71 |
| **Example 5** | 7:3 | 25.6 | 65.12 | 14.00 |
| **Comparative Example 3** | 5:5 | 19.3 | 50.18 | 21.38 |
| **Comparative Example 4** | 10:0 | 15.2 | | 23.08 |

Referring to Table 3 above, a binder film of Comparative Example 4, not including a thermal crosslinking additive (PEGDE), had a relatively low tensile strength value due to a low curing degree, was dissolved in a solvent so that a gel fraction thereof could not be measured, and had a relatively high swelling ratio. In addition, a binder film of Comparative Example 3, including a binder (CMC) and a thermal crosslinking additive (PEGDE) in the same ratio, also showed a relatively low tensile strength value, a relatively low gel fraction value, and a relatively high swelling ratio due to a low curing degree, even though the binder film of Comparative Example 3 included a thermal crosslinking additive (PEGDE).

On the other hand, the binder films of Examples 3 to 5 including a relatively small weight ratio of the thermal crosslinking additive (PEGDE) compared to the binder (CMC) showed relatively high tensile strength and gel fraction values, and relatively low swelling ratios, indicating excellent curing degrees.

Therefore, it is determined that, when the content of the thermal crosslinking additive in the anode including both a binder and a thermal crosslinking additive is controlled to be relatively low compared to the content of the binder, the degree of curing of the anode may be significantly improved, thereby suppressing swelling and the spring back phenomenon of the electrode and improving the energy density of the anode.

As set forth above, according to an embodiment of the disclosed technology, energy density of an anode for a secondary battery may be improved.

According to another embodiment of the disclosed technology, damage to an anode may be prevented during a process of manufacturing a secondary battery.

According to another embodiment of the disclosed technology, deterioration of production processability of a secondary battery may be prevented.

Only specific examples of implementations of certain embodiments may be described. Variations, improvements and enhancements of the disclosed embodiments and other embodiments may be made based on the disclosure of this patent document.

## Claims

1. An anode for a secondary battery, comprising:
an anode current collector; and
an anode mixture layer on at least one surface of the anode current collector,
wherein the anode mixture layer includes an anode active material, a first binder, and a thermal crosslinking additive, and
a weight of the first binder included in the anode mixture layer is greater than a weight of the thermal crosslinking additive included in the anode mixture layer.

2. The anode for a secondary battery of claim 1, wherein the first binder comprises a cellulose-based compound.

3. The anode for a secondary battery of claim 1 or 2, wherein the thermal crosslinking additive comprises at least one selected from the group consisting of epoxy-based compounds, borate-based compounds, thiol-based compounds, and carboxylic acid-based compounds.

4. The anode for a secondary battery of claim 3, wherein the epoxy-based compound comprises at least one selected from the group consisting of poly(ethylene glycol) diglycidyl ether (PEGDE) and polypropylene glycol) diglycidyl ether (PPGDE).

5. The anode for a secondary battery of claim 3 or 4, wherein the borate-based compound comprises at least one selected from the group consisting of sodium borate, sodium tetraborate, tetrahydroxy borate, and sodium tetraborate decahydrate.

6. The anode for a secondary battery of claim 3, wherein the thiol-based compound comprises at least one selected from the group consisting of 3-mercaptopropionic acid, L-cysteine, and 3-mercapto-1,2-propanediol.

7. The anode for a secondary battery of anyone of claims 1 to 6, wherein a weight ratio of the first binder and the thermal crosslinking additive included in the anode mixture layer is greater than 5:5 and equal to or less than 9:1.

8. The anode for a secondary battery of anyone of claims 1 to 7, wherein the weight ratio of the binder and the thermal crosslinking additive included in the anode mixture layer is 7:3 to 9:1.

9. The anode for a secondary battery of anyone of claims 1 to 8, wherein a content of the thermal crosslinking additive included in the anode mixture layer is 0.1 to 5 wt%.

10. The anode for a secondary battery of anyone of claims 1 to 9, wherein the anode mixture layer further comprises a rubber-based compound as a second binder.

11. The anode for a secondary battery of claim 10, wherein a weight ratio of the first binder and the second binder included in the anode mixture layer is 1:1 to 1:5.

12. The anode for a secondary battery of anyone of claims 1 to 11, wherein electrode adhesion between the anode current collector and the anode mixture layer is 0.4N/m² or more.

13. The anode for a secondary battery of anyone of claims 1 to 12, wherein the anode mixture layer comprises
a first anode mixture layer on the anode current collector, and
a second anode mixture layer on the first anode mixture layer.

14. The anode for a secondary battery of claim 13, wherein the thermal crosslinking additive is included in the second anode mixture layer.

15. A lithium secondary battery, comprising:
the anode for a secondary battery of anyone of claims 1 to 14.
